# EUROPEAN PATENT SPECIFICATION

(11) **EP 1 345 807 B1**
(45) Date of publication and mention of the grant of the patent: **15.09.2004**
(21) Application number: 01936807.5
(22) Date of filing: 18.05.2001
(51) Int. Cl.: B62D 65/00, B65G 49/04

(54) **AUTOMATIC MODULAR SYSTEM FOR CONVEYING AND PROCESSING VEHICLE BODIES**
AUTOMATISCHES MODULARES SYSTEM ZUR BEFÖRDERUNG UND BEHANDLUNG VON FAHRZEUGKAROSSERIEN
SYSTEME MODULAIRE AUTOMATIQUE POUR TRANSPORTER ET TRAITER DES CARROSSERIES DE VEHICULES

(30) Priority: 22.12.2000 IT MI20002824
(43) Date of publication of application: 24.09.2003
(73) Proprietor: GEICO S.p.A., I-20092 Cinisello Balsamo, Milano (IT)
(72) Inventor: NERI, Francesco, I-27030 S. Angelo Lomellina (IT)
(74) Representative: Cicogna, Franco
(86) International application number: PCT/IT2001/000249
(87) International publication number: WO 2002/051695

(56) References cited:
- GB-A- 1 231 921
- GB-A- 2 144 386
- US-A- 5 340 249
- US-A- 5 718 320

## Description

### BACKGROUND OF THE INVENTION

The present invention relates to an automatic modular system for processing and conveying bodies of motor vehicles and the like.

As is known, in conventional methods for processing and painting bodies of motor vehicles and the like, said bodies must be subjected to a series of following surface processing operations, such as a dipping degreasing and spraying operation, a washing operation, phosphatizing operation, and yet other finishing washing operations.

The thus processed motor vehicle bodies are then subjected to a passivation step, including washing and cataphoresis and dip painting operations, followed by finishing washing steps; in this connection it should be apparent that the processing cycles and the used products will depend on the used chemical compositions.

The above disclosed processing steps are usually carried out in dipping basins, into which the motor vehicle body is introduced and held for the desired processing time.

Prior approaches for performing the above mentioned operations conventionally provide for the use of very complex systems, of a scarcely flexible operation, in which the motor vehicle bodies are caused to be continuously fed, being supported on so-called skids which are taken, at said processing basins, by arch members to introduce the motor vehicle bodies into the processing basin with a desired inclination.

Such a system construction, designed for a middle-low volume production method, is affected by great construction problems, since it is necessary to provide processing basins of a comparatively large size, and, moreover, it is also necessary to use very large amounts of processing liquids, which are not justified by the comparatively low production rate.

Yet another problem is that prior systems, as mentioned, have a substantially non flexible operation, that is they do not allow to easily modify or change the succession of the operating steps.

Furthermore, the above mentioned prior systems require a lot of processing time, required by long duration processing steps.

The document GB-A- 2 144 386 which has been marked by an ypsilon in the PCT search report, discloses an apparatus for operating on at least one article of a plurality of articles which are being continuously transported in succession along a path, comprising means adapted to remove at least one article from respective location of the path, means for moving the at least one article to a position at which the at least one article can be operated and means adapted to return the at least one article from said position to a respective vacant location of the path.

The document US-A-5 718 320, which has been also marked by an ypsilon in the PCT search report, discloses a conveyor for detachable skid platforms including a conveyor path defining conveying direction with an endless drive transporter: this document however neither teaches nor addresses to provide at least a processing basin which basing supports a pair of arch members for removing the skid from the shuttle assembly.

### SUMMARY OF THE INVENTION

Accordingly, the aim of the present invention is to overcome the above mentioned problems, for middle-low volume production rates, by providing an automatic system for surface processing bodies of motor vehicles and the like, which is very flexible from the operation standpoint, due to a use of a specifically designed processing basin and handling system, which basin can be easily fitted to the system making line, and which has a comparatively small size.

Within the scope of the above mentioned aim, a main object of the present invention is to provide such a system allowing to use that number of processing basins which is considered as necessary for the intended processing of the motor vehicle bodies, while allowing to easily modify, at will, both the succession of the processing steps and the processing steps themselves to be performed on the individual motor vehicle bodies, as well as the volume capability of the processing basins and related hydraulic circuits.

Another object of the present invention is to provide such an automatic system simplifying all the controlling and managing operations and which, in particular, does not require specifically designed means for driving the motor vehicle body supporting skids, while allowing to independently monitor the operation of each individual processing basin.

Yet another object of the present invention is to provide such a motor vehicle body surface processing system which, owing to its specifically designed construction, is very reliable and safe in operation.

According to one aspect of the present invention, the above mentioned aim and objects, as well, as yet other objects, which will become more apparent hereinafter, are achieved by an automatic system for surface processing bodies of motor vehicles and the like, according to claim 1.

### BRIEF DESCRIPTION OF THE DRAWINGS

Further characteristics and advantages of the invention will become more apparent hereinafter from the following detailed disclosure of a preferred, though not exclusive, embodiment of an automatic system for surface processing bodies of motor vehicles and the like, which is illustrated, by way of an indicative, but not limitative, example in the figures of the accompanying drawings, where:

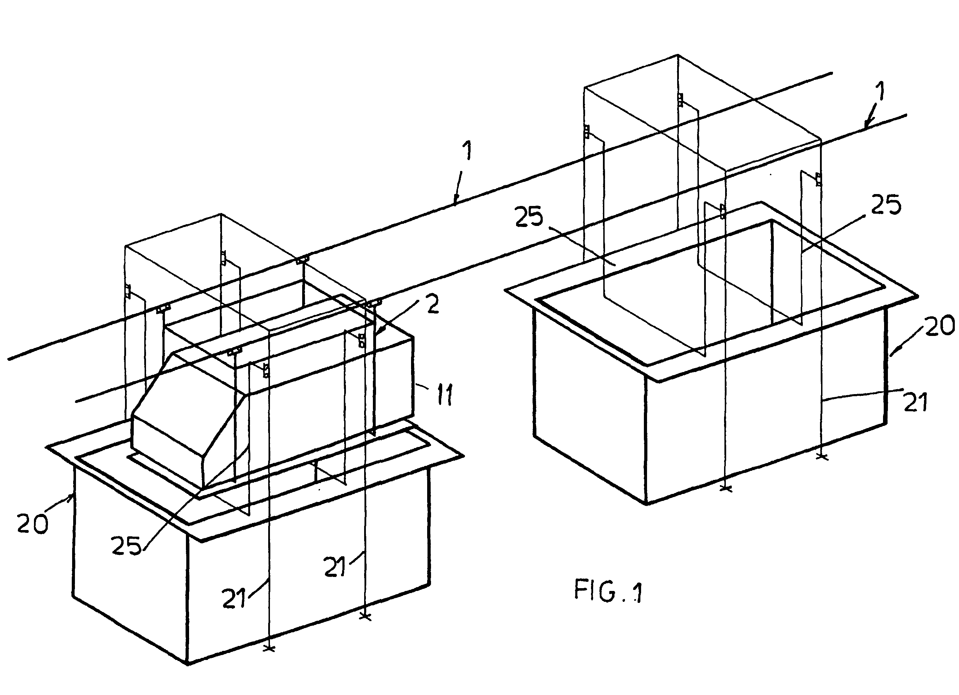

Figure 1 is a schematic view illustrating the automatic processing system according to the present invention;

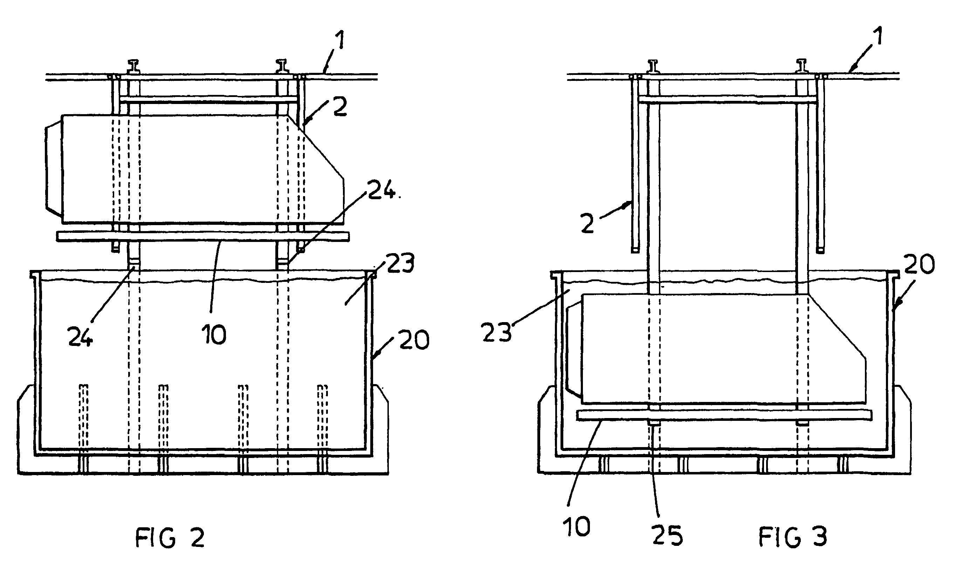

Figure 2 is a schematic side elevation view illustrating a processing basin with a motor vehicle body arranged thereabove;
Figure 3 is a detail view illustrating a processing basin with the motor vehicle body removed from the arch members and dipped into the processing basin;

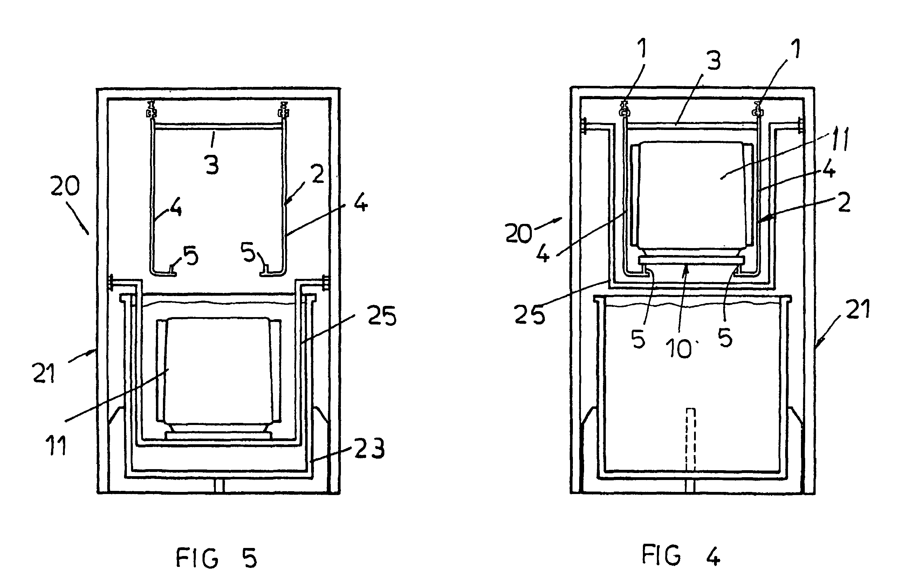

Figure 4 is a front view illustrating the motor vehicle body arranged on the top of the processing basin;
Figure 5 is a further front view illustrating the motor vehicle body arranged inside the processing basin;

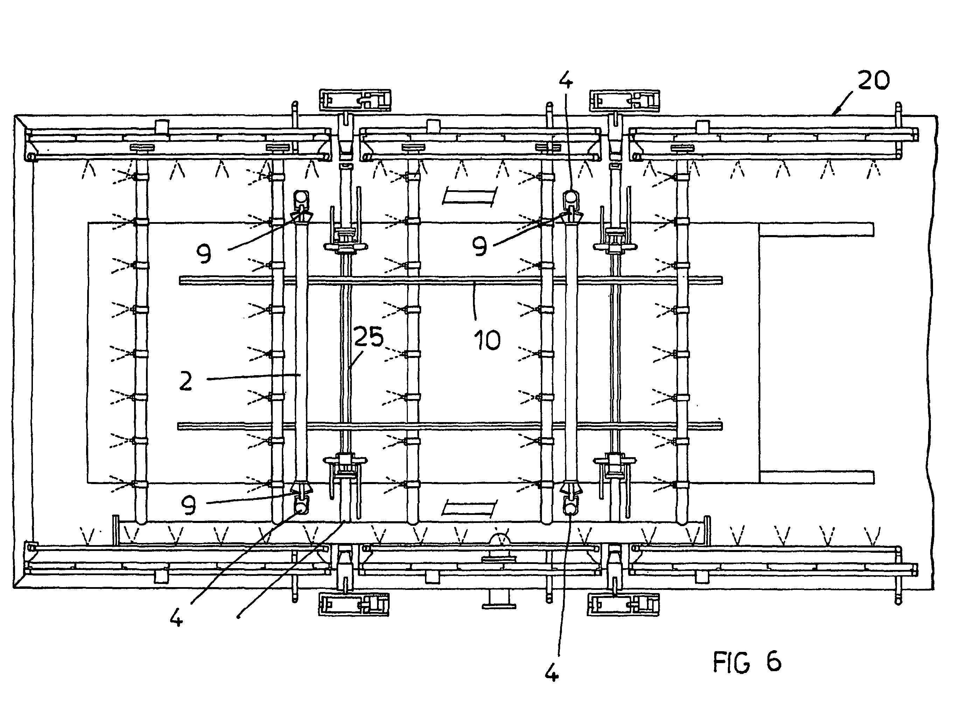

Figure 6 is a top plan view illustrating the processing basin and clearing showing the taking-up or removing arch member;

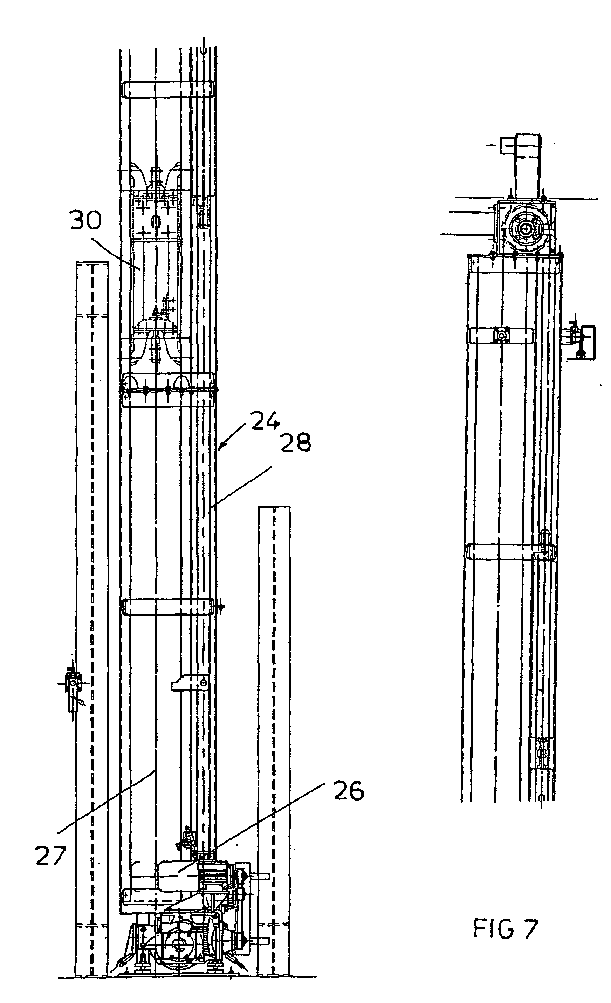

Figure 7 is a further side view illustrating an upright for driving the arch members;

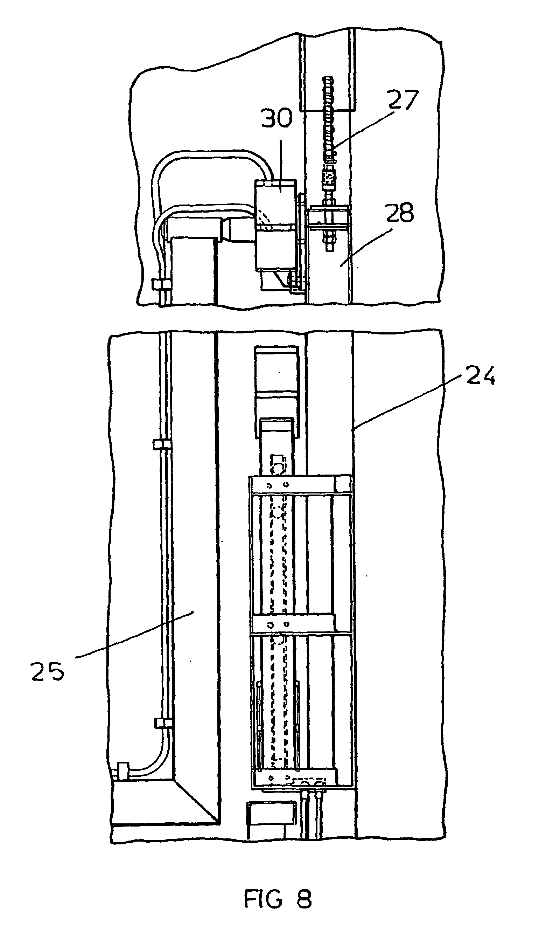

Figure 8 is a front partially broken away view illustrating a portion of an arch member and the mentioned upright with driving means for displacing or driving said arch members;

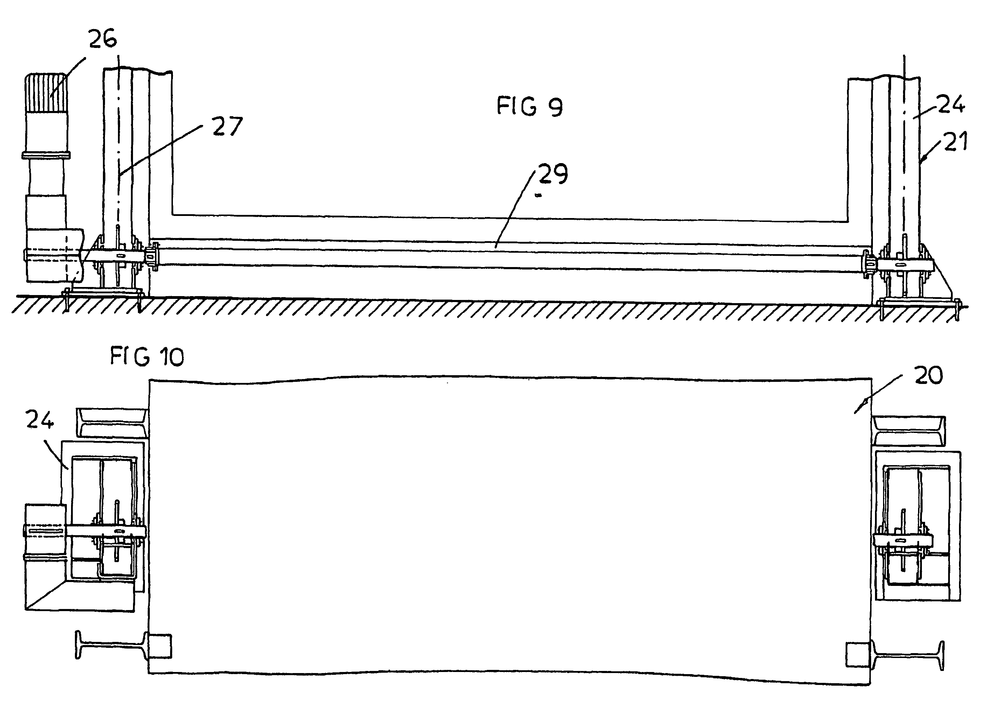

Figure 9 illustrates intercoupling means for interconnecting the arch member driving means;
Figure 10 is a partially broken away view illustrating the uprights with the arch driving means shown in a top plan view;

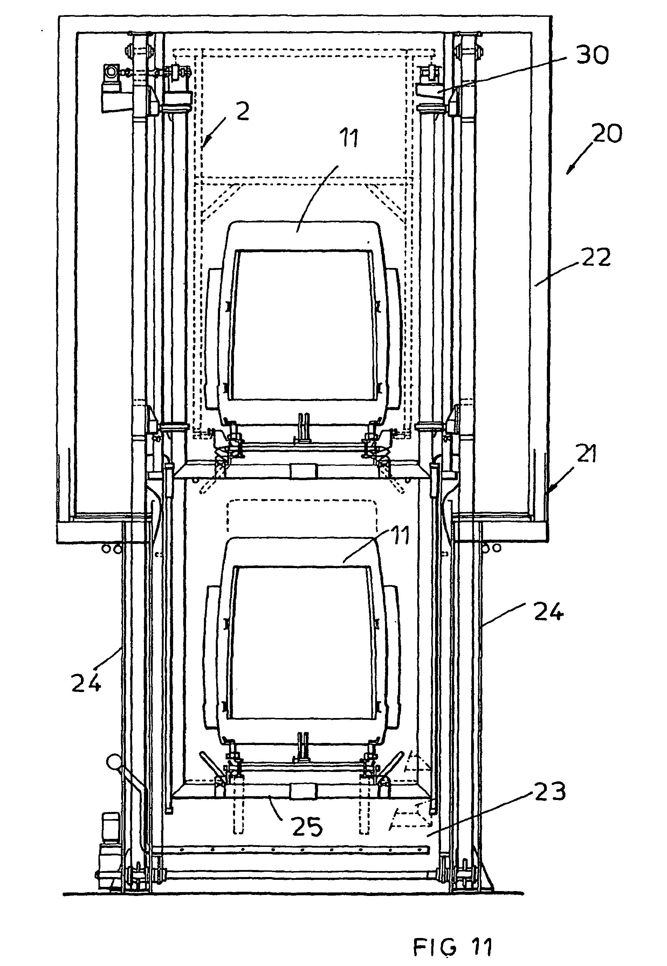

Figure 11 is a schematic front view illustrating a processing basin with a motor vehicle body being processed and a further motor vehicle body being conveyed thereabove;

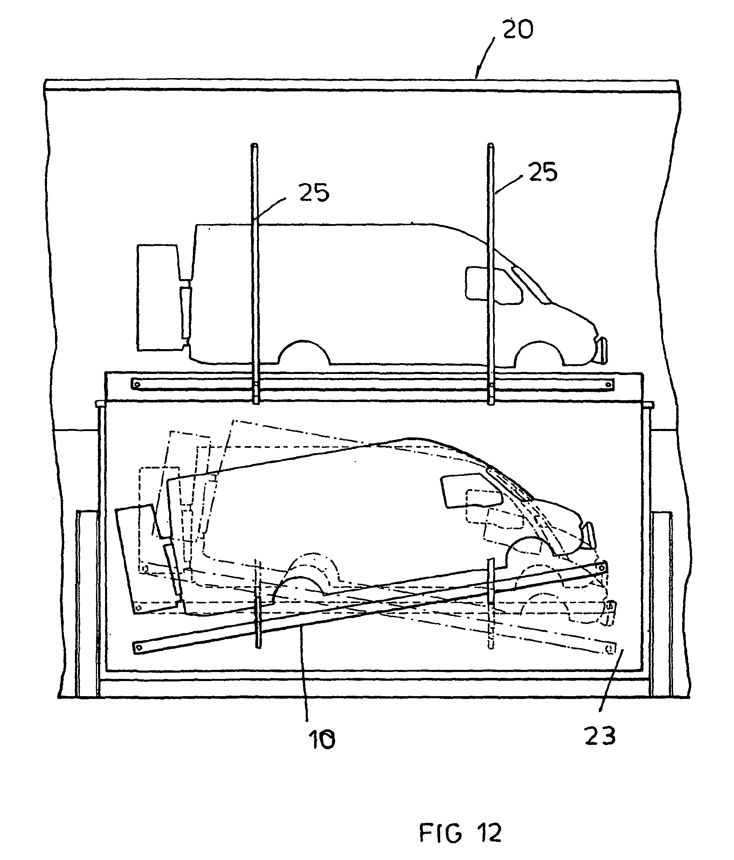

Figure 12 is a side elevation view illustrating a motor vehicle body dipped in the processing basin, and clearly shows, by a dashed line the inclination which can be assumed by the motor vehicle body in order to facilitate the introduction thereof into the processing basin;

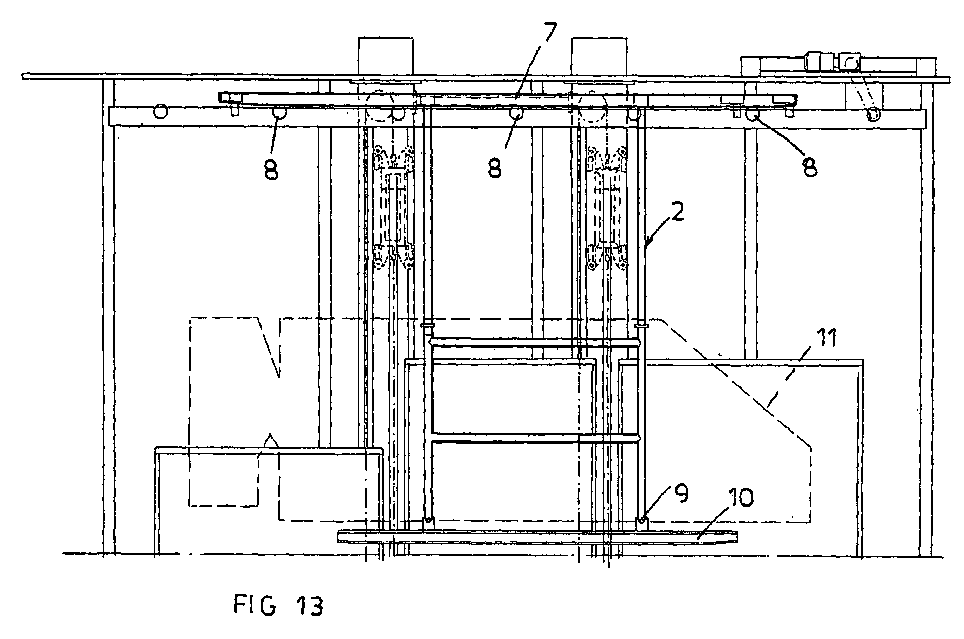

Figure 13 illustrates the driving means for driving or transferring the shuttle assembly;
Figure 14 is a front view illustrating the shuttle assembly before the removal of the supporting skid;

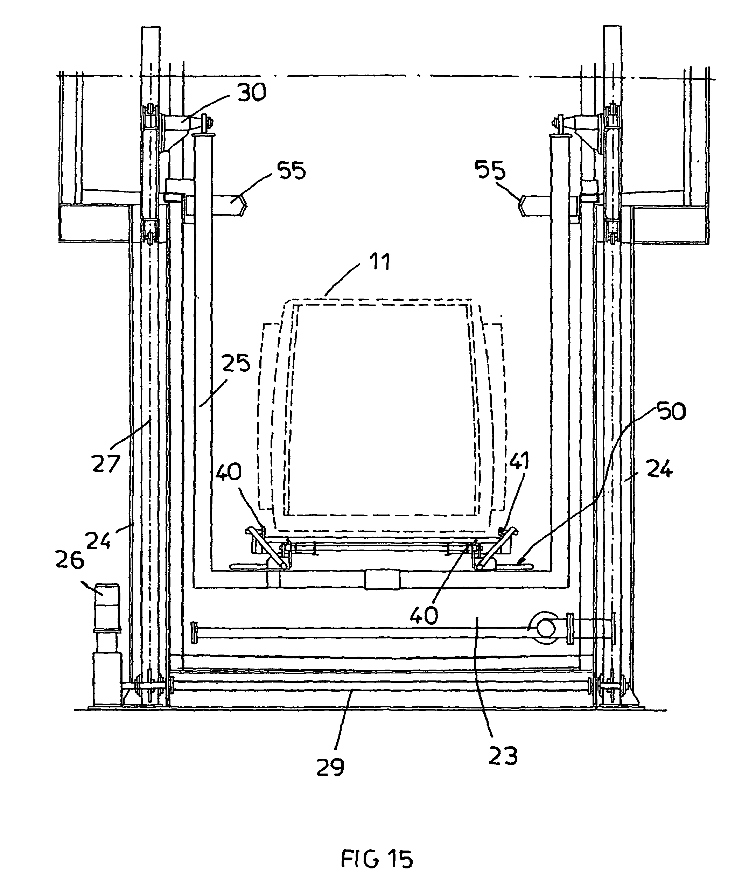

Figure 15 is a further front view illustrating the processing basin with an arch member dipped therein;

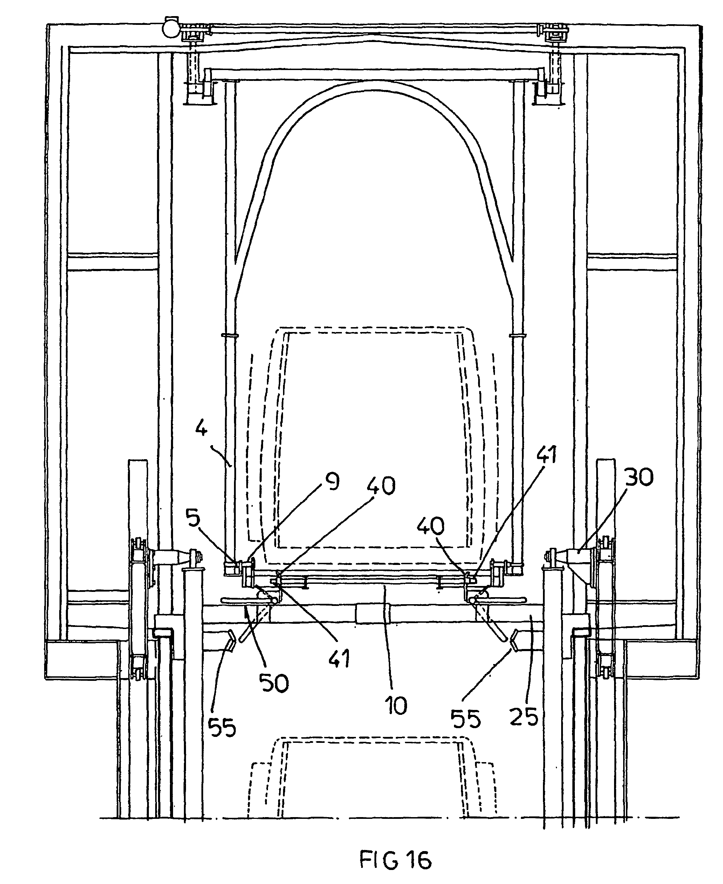

Figure 16 is a further front view illustrating the processing basin with a motor vehicle body arranged in the inside of said processing basin and a shuttle assembly being conveyed thereabove;

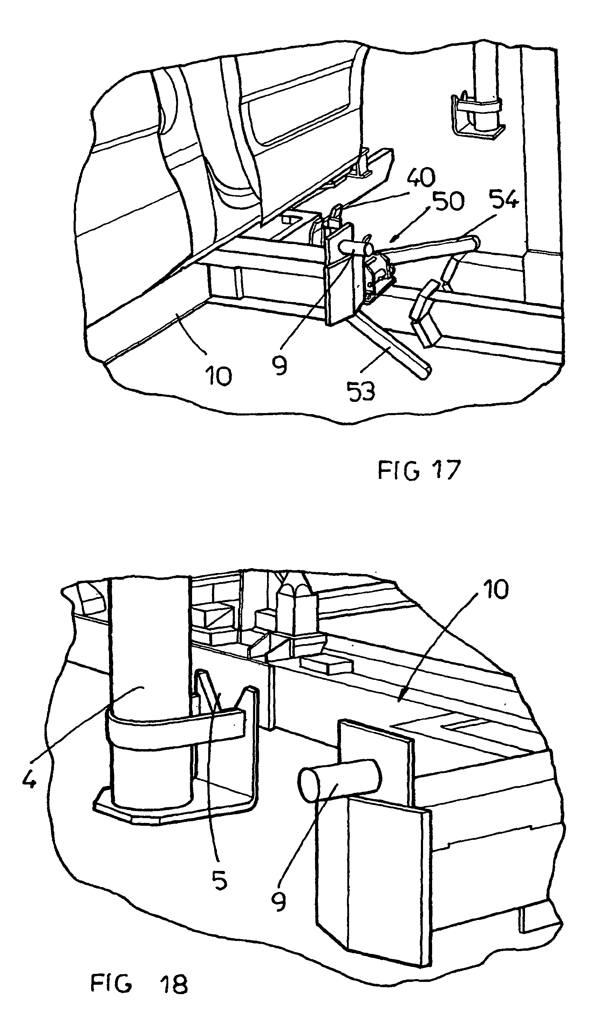

Figure 17 is a perspective view illustrating locking means for locking the supporting skid coupled to the driving means;
Figure 18 is a detail view showing the coupling means connecting the shuttle assembly and skid;

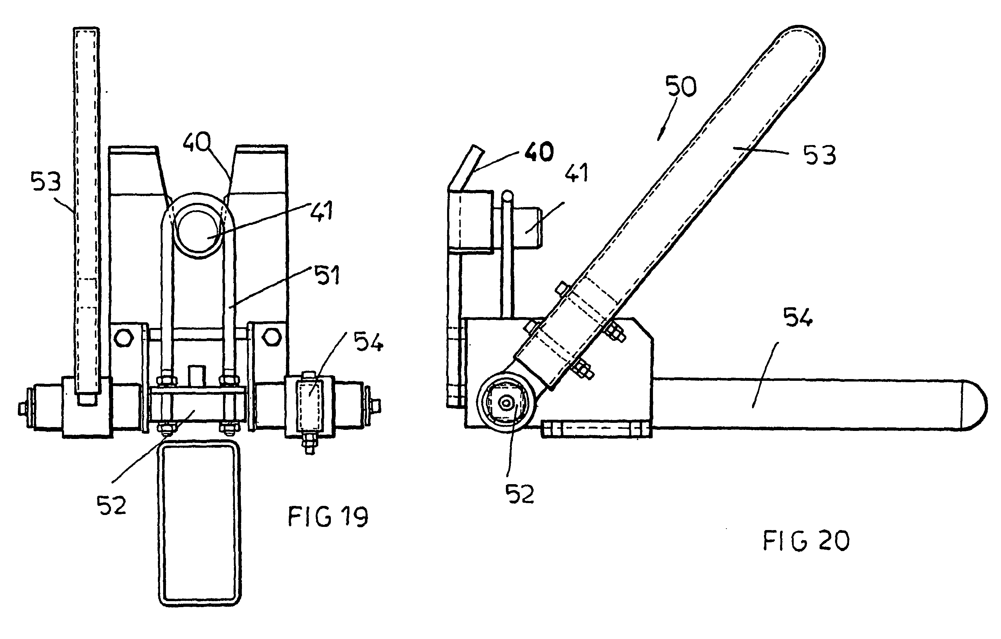

Figure 19 is a detail front view illustrating said locking means;
Figure 20 is a side view illustrating the mentioned locking means;

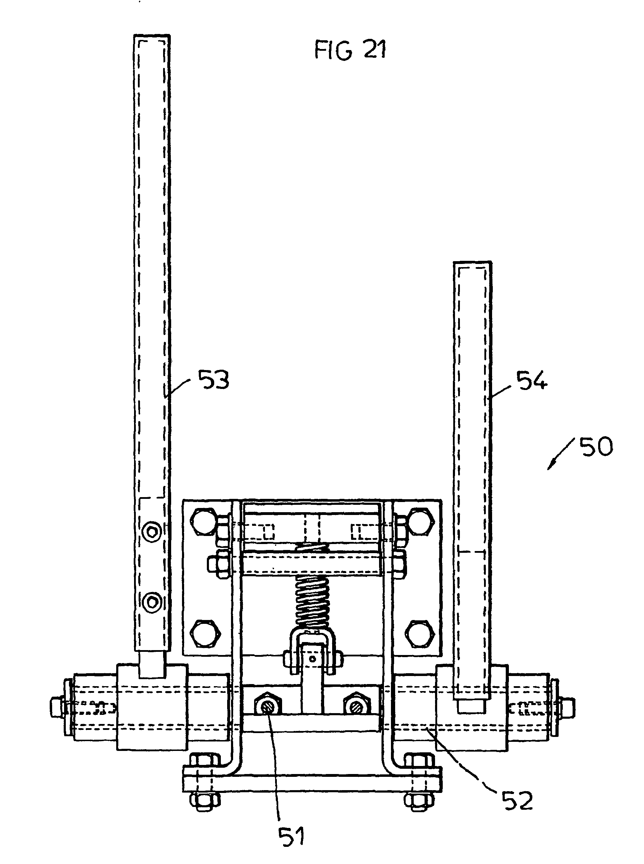

Figure 21 is a top plan view illustrating the mentioned locking means.

### DESCRIPTION OF THE PREFERRED EMBODIMENTS

With reference to the number references of the above mentioned figures, the automatic processing system for surface processing bodies of motor vehicles and the like comprises a transferring track, generally indicated by the reference number 1, which advantageously comprises a pair of rails thereon a shuttle assembly 2 is caused to slide, said shuttle assembly including top cross-members 3 supporting corresponding vertical arms 4.

Said vertical arms 4 end with fork elements 5, engaging with cross pins 9 of a supporting skid 10, in turn supporting a motor vehicle body or the like, generally indicated by the reference number 11.

The cross members 3 are connected, at the top thereof, to longitudinal beams 7, and bear on a plurality of driving or entraining belts or chains 8 which, at respective end portions thereof, are controlled or driven by controlling motors.

Thus, a plurality of offset belts or chains is provided, the chains or belts of which are offset from one another and coupled on corresponding shafts, so that a belt or chain entrains or drives the following pulleys.

The latter, in turn, being keyed on a same shaft as that of an adjoining pulley, drives a second pair, and so on, to sequentially drive a series of belts or chains for driving the shuttle assembly.

The conveying track affects at least a processing basin, generally indicated by the reference number 20, which is provided with a supporting framework 21 to which the transfer track are coupled.

At each processing basin is provided a top closing panel 22, where the motor vehicle bodies are driven, as well as a basin portion 23 arranged at the bottom.

At said basin portion 23, a plurality of uprights 24 are provided, affected by driving means of a pair of arch members, indicated by the reference number 25, operating to take-up or remove the supporting skid 10 and related body from the shuttle assembly 2 for introducing said body into said processing basin.

On said uprights 24 are provided driving means including a driving motor 26 entraining a chain or belt 27, continuously extending inside the upright 24 and being coupled to a counterweight 28 operating for balancing the weight of the supporting skid and arch members.

The driving motor 26 drives a cross shaft 29 provided at the bottom portion of the processing basin and driving, in turn, a like chain or belt 27 arranged on the opposite front portion of the processing basin.

To the chain or belt 27 a carriage 30 is coupled, said carriage supporting an end portion of a respective arch member 25, to cause the latter to be lowered with a desired displacement inside the processing basin.

The provision of two uprights 24 and, consequently, two spaced arch members, allows, by affecting the lowering movement of the individual arch members, to incline at will the motor vehicle body, thereby allowing said motor vehicle body to be quickly and easily introduced into the processing basin.

Each arch member is moreover provided with taking or removing means for taking the supporting skid and removing it from the shuttle assembly, said means comprising counter-forks 40 engaging with taking pins 41 provided on the supporting skid 10.

Thus it is possible, to remove a motor vehicle body, to perform a starting upward displacement operation, for driving upward the supporting skid with respect to the vertical branch of the shuttle assembly, to cause the cross pin to project from the shuttle assembly fork thereby causing the supporting skid to disengage from the shuttle assembly itself.

Upon having performed this disengagement operation, the shuttle assembly is further driven, and the arch elements are lowered to cause the motor vehicle body to be dipped into the processing basin.

During this operation, are further operated locking means, generally indicated by the reference number 50, comprising a locking arch element 51, extending from a locking mandrel 52, therefrom radially project a first cam lever 53 and a second cam lever 54, angularly offset from one another and designed for abutting against locking abutments 55 provided on the fixed framework of the processing basin.

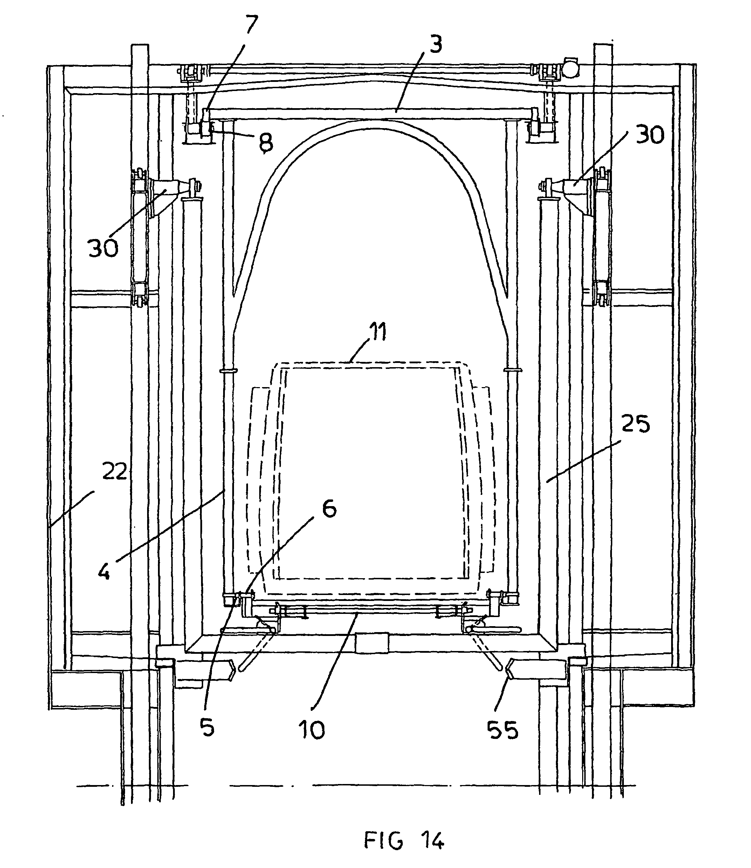

With the disclosed arrangement, during the lowering operation, and with reference to figure 14, the abutment 55 will engage with the second lever 54, thereby rotatively driving the mandrel 52, and causing the arch element 51 to engage with the locking pin rigidly coupling the skid to the arch member.

By the above mentioned locking, the motor vehicle body is entrained by the arch members to the bottom of the processing basin, with the desired inclination, to be processed as desired.

During the raising operation, the first lever 53 engages with the abutment 55, thereby causing the mandrel 52 to be rotatively driven anticlockwise, to disengage the arch element from the cross pin.

In this connection it should be moreover pointed out that, by the above disclosed arrangement, it is possible, with a motor vehicle body being processed in the basin portion, to displace or convey thereabove, through corresponding shuttle assemblies 2, further motor vehicle bodies which are conveyed to following processing operations.

This feature allows to optimize the configuration of the system and, moreover, affords the possibility of improving the processing rate, while allowing to further perform processing operations such cataphoresis and phosphatizing operations requiring comparatively longer processing times.

Moreover, since the motor vehicle bodies can be individually independently removed from the processing track, it is possible to provide a processing system of very flexible operation, in which all the processing steps are actually improved.

In operation, the motor vehicle bodies are conveyed by the shuttle assemblies which, as they arrive at the preset processing basin, are stopped to allow the arch member removing means to disengage the motor vehicle bodies from its single supporting shuttle assembly, to be then further driven along the processing track.

At another processing basin, furthermore, it is possible to remove another motor vehicle body to be processed.

The supporting skid taken by the pair of arch members can be lowered with a desired inclination into the processing basin, owing to the provision of specifically designed driving means provided in the uprights 24.

During the supporting skid lowering step, the supporting skid and arch members are automatically locked, by engaging the cam means comprising the cam levers 53 and 54 with the abutment 55, performing the locking operation during the lowering step and automatically performing the unlocking operation during the raising step.

Thus, it is possible to perform the several required processing operations in the individual processing basins.

For example, in a case in which a cataphoresis operation must be performed, conventional electric contact bearing skids for providing an electrical connection of the motor vehicle body would be provided.

Moreover, it is also possible to perform all the desired processing steps in the desired or set time periods, since the motor vehicle body is removed from the shuttle assembly driving track, thereby the shuttle assemblies are not bound to perform a preset succession of processing operations.

From the above disclosure it should be apparent that the invention fully achieves the intended aim and objects.

In particular, the fact is to be pointed out that an automatic processing system has been designed, which is very efficient and flexible in operation, and which allows to provide any desired numbers of processing basins.

The processing basins will constitute, in actual practice, stand alone or individual processing units, which individually manage all the operating processing steps.

The invention as disclosed is susceptible to several modifications and variations, all of which will come within the scope of the claims.

In practicing the invention, the used materials, provided that they are compatible with the intended application, as well as the contingent size and shapes, can be any, depending on requirements.

## Claims

1. An automatic system for surface processing bodies of motor vehicles and the like, said automatic processing system comprising a track (1) for driving therethrough a shuttle assembly (2) supporting a skid (10) thereon a motor vehicle body (11) is arranged, said shuttle assembly (2) including top cross members (3) supporting vertical arms (4) ending with fork elements engaging with said skid (10), said system further comprising longitudinal beams (7) coupling said cross members (3) and engageable with driving means, for driving said shuttle assembly, said track (1) comprising at least a processing basin (20) supporting a pair of arch members (25) for removing said skid (10) from said shuttle assembly (2), and driving means (27) for vertically driving said arch members (25) for dipping said motor vehicle body (11) into said processing basin (20), said driving means for driving said shuttle assembly (2) comprise a plurality of driving belts (8) coupled to rubberized wheels supporting said longitudinal beams (7), said belts (8) being offset from one another and coupled to related shafts, and that each belt (8) entrains pulleys adjoining corresponding pulleys keyed on the same shaft, for driving an adjoining shaft.

2. An automatic system, according to Claim 1, **characterized in that** said skid (10) comprises cross pins (9) for removably engaging fork elements (5) provided at corresponding end portions of said vertical arms (4).

3. An automatic system, according to Claim 1, **characterized in that** said system comprises, at at least a processing basin (20), a supporting framework (21) to which said transfer tracks (1) are coupled.

4. An automatic system, according to Claim 3, **characterized in that** said framework (21) comprises a top portion (22) delimiting the transit region of said shuttle assemblies (2) and a bottom basin portion (23).

5. An automatic system, according to Claim 1, **characterized in that** said system comprises, on the sides of said processing basin (20), a pair of uprights (24) thereon said arch member (25) driving means (26,27) operate.

6. An automatic system, according to Claim 5, **characterized in that** said driving means (26,27) comprise a driving motor (26) driving a chain or belt (27), continuously entrained inside a related upright (24) and being coupled to a counterweight (28), to said chain or belt (27) a carriage (36) for supporting an end portion of a respective arch member (25) being moreover connected.

7. An automatic system, according to Claim 6, **characterized in that** said driving means driving motor (26) drives a cross shaft (29) arranged at a bottom part of the basin portion and being adapted to drive a chain (27) entrained inside said upright arranged on the opposite side.

8. An automatic system, according to one or more of the preceding claims, **characterized in that** said skid (10) taking or removing means comprise counter-forks (40) arranged at a respective end portion of each said arch members (25) and provided for engaging with taking pins (41) formed on said supporting skid (10).

9. An automatic system, according to one or more of the preceding claims, **characterized in that** said system comprises locking means (50) operating on said taking pins (41) for causing said arch members (25) to be rigidly coupled to said supporting skid (10).

10. An automatic system, according to one or more of the preceding claims, **characterized in that** said locking means (50) comprise a locking arch element (51) extending from a locking mandrel (52) therefrom radially project a first cam lever (53) and a second cam lever (54), angularly offset from one another and designed for abutting against locking abutments (55) provided on the fixed framework (21) of the basin portion (23).

11. An automatic system, according to one or more of the preceding claims, **characterized in that**, as said arch member (25) is lowered, said locking abutments (55) engage with the second cam lever (54) for rotatively driving the locking shaft to bring said locking arch element (51) in engagement with the taking pin (9) whereas, as said arch member (25) is raised, said first cam lever (53) engages with said abutments (55) for disengaging said locking arch element (51) from its related taking pin (9).

## Patentansprüche

1. Automatisches System zur Oberflächenbehandlung von Fahrzeugkarosserien und dergleichen; wobei dieses automatische Behandlungssystem eine Bahn (1) umfasst, die von einem Shuttle-Aufbau (2) befahren wird, der einen Schlitten (10) trägt, auf welchem eine Kraftfahrzeugkarosserie (11) angeordnet ist, wobei dieser Shuttle-Aufbau (2) obere Querträger (3) umfasst, die vertikale Arme (4) tragen, die mit Gabelelementen enden, die mit diesen Schlitten (10) im Eingriff stehen, das System darüber hinaus Längsträger (7) umfasst, die diese Querträger (3) verbinden und mit Antriebsmitteln zum Antreiben des Shuttle-Aufbaus (2) im Eingriff stehen können, die Bahn (1) mindestens ein Behandlungsbecken (20) umfasst, das ein Paar Bogenelemente (25) trägt, um den Schlitten (10) vom Shuttle-Aufbau (2) zu entnehmen, und Antriebsmittel (27), um die Bogenelemente (25) vertikal anzutreiben, damit die Fahrzeugkarosserie (11) in das Behandlungsbecken (20) eingetaucht wird, die Antriebsmittel zum Abtreiben des Shuttle-Aufbaus (2) eine Vielzahl von Antriebsriemen (8) umfassen, die mit gummierten Rädern gekoppelt sind, die diese Längsträger (7) tragen, wobei diese Riemen (8) voneinander versetzt sind und mit zugehörigen Wellen verbunden sind, und dass jeder Riemen (8) Riemenscheiben mitnimmt, die benachbart zu entsprechenden Riemenscheiben sind, die auf derselben Welle verkeilt sind, um eine benachbarte Welle anzutreiben.

2. Automatisches System nach Anspruch 1, **dadurch gekennzeichnet, dass** der Schlitten (10) Kreuzzapfen (9) umfasst, um auf abnehmbare Weise in die Gabelelemente (5) einzugreifen, die an entsprechenden Endabschnitten der vertikalen Arme (4) vorgesehen sind.

3. Automatisches System nach Anspruch 1, **dadurch gekennzeichnet, dass** das System an mindestens einem Behandlungsbecken (20) einen Tragrahmen (21) umfasst, mit welchem Transferbahnen (1) verbunden sind.

4. Automatisches System nach Anspruch 3, **dadurch gekennzeichnet, dass** der Tragrahmen (21) einen oberen Abschnitt (22) umfasst, der den Durchgangsbereich der Shuttle-Aufbauten (2) begrenzt, und einen unteren Beckenabschnitt (23).

5. Automatisches System nach Anspruch 1, **dadurch gekennzeichnet, dass** das System außerdem auf den Seiten des Behandlungsbeckens (20) ein Paar Pfosten (24) umfasst, worauf das Antriebsmittel (26, 27) der Bogenelemente (25) betrieben wird.

6. Automatisches System nach Anspruch 5, **dadurch gekennzeichnet, dass** das Antriebsmittel (26, 27) einen Antriebsmotor (26) umfasst, der eine Kette oder einen Riemen (27) antreibt, die/der im Inneren eines zugehörigen Pfostens (24) endlos mitgenommen wird und mit einem Gegengewicht (28) gekoppelt ist, wobei mit dieser Kette oder diesem Riemen (27) zudem ein Träger (36) zum Tragen eines Endabschnitts eines jeweiligen Bogenelements (25) verbunden ist.

7. Automatisches System nach Anspruch 6, **dadurch gekennzeichnet, dass** der Antriebsmotor (26) des Antriebsmittels eine Kreuzwelle (29) antreibt, die in einem Bodenabschnitt des Beckenabschnitts angeordnet ist und geeignet ist, eine Kette (27) anzutreiben, die im Inneren des Pfostens mitgenommen wird, der auf der gegenüberliegenden Seite angeordnet ist.

8. Automatisches System nach einem oder mehreren der obigen Ansprüche, **dadurch gekennzeichnet, dass** die Mittel zur Aufnahme oder Entnahme des Schlittens (10) Gegengabeln (40) umfassen, die an einem jeweiligen Endabschnitt jedes der Bogenelemente (25) angeordnet sind und vorgesehen sind, um mit Aufnahmezapfen (41) im Eingriff zu stehen, die am Tragschlitten (10) geformt sind.

9. Automatisches System nach einem oder mehreren der obigen Ansprüche, **dadurch gekennzeichnet, daß** das System Verriegelungsmittel (50) umfasst, die an diesen Aufnahmezapfen (41) betätigt werden, um zu bewirken, dass die Bogenelemente (25) mit dem Tragschlitten (10) starr verbunden sind.

10. Automatisches System nach einem oder mehreren der obigen Ansprüche, **dadurch gekennzeichnet, dass** das Verriegelungsmittel (50) ein Verriegelungsbogenelement (51) umfaßt, das von einem Verriegelungsdorn (52) aus verläuft, wovon ein erster Nockenhebel (53) und ein zweiter Nockenhebel (54) radial vorspringt, die voneinander winkelversetzt sind und ausgelegt sind, um gegen Verriegelungauflager (55) aufzuliegen, die am feststehenden Rahmen (21) des Beckenabschnitts (23) vorgesehen sind.

11. Automatisches System nach einem oder mehreren der obigen Ansprüche, **dadurch gekennzeichnet, dass** beim Absenken des Bogenelements (25) die Verriegelungauflager (55) mit dem zweiten Nockenhebel (54) in Eingriff kommen, um das Verriegelungsbogenelement (51) durch Drehen der Verriegelungswelle im Eingriff mit dem Aufnahmezapfen (9) zu bringen, während beim Heben des Bogenelements (25) der erste Nockenhebel (53) mit diesen Auflagern (55) in Eingriff kommt, um das Verriegelungsbogenelement (51) von seinem zugehörigen Aufnahmezapfen (9) zu lösen.

## Revendications

1. Système automatique de traitement de surface de carrosseries de véhicules motorisés et semblables, ledit système automatique de traitement comprenant une voie (1) pour y actionner un dispositif de navette (2) supportant une cale (10) au-dessus de laquelle une carrosserie de véhicule motorisé (11) est disposée, ledit dispositif de navette (2) comprenant des éléments transversaux supérieurs (3) supportant des bras verticaux (4) se terminant par des éléments fourchés s'engageant avec ladite cale (10), ledit système comprenant en outre des rayons longitudinaux (7) couplant lesdits éléments transversaux (3) et étant engageables avec les moyens d'actionnement, afin d'actionner ledit dispositif de navette, ladite voie (1) comprenant au moins une cuvette de traitement (20) supportant une paire d'éléments courbés (25) pour retirer ladite cale (10) dudit dispositif de navette (2), et des moyens d'actionnement (27) pour actionner verticalement lesdits éléments courbés (25) afin de plonger ladite carrosserie (11) du véhicule motorisé dans ladite cuvette de traitement (20), lesdits moyens d'actionnement pour actionner ledit dispositif de navette (2) comprennent plusieurs courroies d'actionnement (8) couplées à des roues caoutchoutées supportant lesdits rayons transversaux (7), lesdites courroies (8) étant décalées les unes des autres et couplées à des arbres apparentés, et en ce que chacune des courroies (8) entraîne des poulies correspondantes avoisinant des poulies enclenchées sur le même arbre, pour actionner un arbre avoisinant.

2. Système automatique, selon la revendication 1, **caractérisé en ce que** ladite cale (10) comprend des broches transversales (9) pour engager de manière amovible des éléments fourchés (5) prévus aux parties d'extrémité correspondantes desdits bras verticaux (4).

3. Système automatique, selon la revendication 1, **caractérisé en ce que** ledit système comprend, au moins au niveau d'une cuvette de traitement (20), une structure de support (21) à laquelle ladite voie de transfert (1) est couplée.

4. Système automatique, selon la revendication 3, **caractérisé en ce que** ladite structure (21) comprend une partie supérieure (22) délimitant la région de passage dudit dispositif de navette (2) et une partie inférieure (23) de la cuvette.

5. Système automatique, selon la revendication 1, **caractérisé en ce que** ledit système comprend, sur les côtés de la cuvette de traitement (20), une paire de colonnes (24) au-dessus desquelles lesdits moyens d'actionnement (26, 27) à éléments courbés (25) agissent.

6. Système automatique, selon la revendication 5, **caractérisé en ce que** lesdits moyens d'actionnement (26, 27) comprennent un moteur d'actionnement (26) actionnant une chaîne ou courroie (27), entraînée continuellement à l'intérieur d'une colonne décrite (24) et étant couplée à un contrepoids (28) ; à ladite chaîne ou courroie (27) étant de plus connecté un moyen de transport (36) pour supporter une partie d'extrémité d'un élément courbé (25) respectif.

7. Système automatique, selon la revendication 6, **caractérisé en ce que** ledit moteur d'actionnement (26) des moyens d'actionnement, actionne un arbre transversal (29) disposé au niveau d'une partie inférieure de la partie de cuvette et étant adapté pour actionner une chaîne (27) entraînée à l'intérieur de ladite colonne disposée sur le côté opposé.

8. Système automatique, selon l'une quelconque des revendications précédentes, **caractérisé en ce que** lesdits moyens de prise ou d'enlèvement de cale (10) comprennent des contre-fourches (40) disposées au niveau d'une partie d'extrémité respective de chacun desdits éléments courbés (25) et sont prévus pour s'engager avec des broches de prise (« taking pin ») (41) formées sur ladite cale de support (10).

9. Système automatique, selon l'une quelconque des revendications précédentes, **caractérisé en ce que** ledit système comprend des moyens de blocage (50) agissant sur lesdites broches de prise (41) afin que lesdits éléments courbés (25) soient couplés de manière rigide à ladite cale de support (10).

10. Système automatique, selon l'une quelconque des revendications précédentes, **caractérisé en ce que** lesdits moyens de blocage (50) comprennent un élément courbé de blocage (51) s'étendant d'un mandrin de blocage (52), de là se projetant radialement un premier levier à came (53) et un second levier à came (54), décalés l'un de l'autre et étudiés pour buter contre les butées de blocage (55) prévues sur la structure fixe (21) de la partie de cuvette (23).

11. Système automatique, selon l'une quelconque des revendications précédentes, **caractérisé en ce que** lorsque ledit élément courbé (25) est abaissé, lesdites butées de blocage (55) s'engagent avec un second levier à came (54) pour actionner de manière rotative l'arbre de blocage afin de placer lesdits éléments courbés de blocage (51) en position d'engagement avec lesdites broches de prise (9) alors que, lorsque ledit élément courbé (25) est élevé, ledit premier levier à came (53) s'engage avec lesdites butées (55) pour désengager lesdits éléments courbés de blocage (51) de leurs broches de prise (9) apparentées.
